# EUROPEAN PATENT SPECIFICATION

(11) **EP 2 233 601 B1**
(45) Date of publication and mention of the grant of the patent: **30.07.2014**
(21) Application number: 10007118.2
(22) Date of filing: 31.05.2002
(51) Int. Cl.: C23C 8/20, C23C 8/22, C21D 1/06, C21D 1/10

(54) **Carburization treatment method**
Verfahren und Vorrichtung zum Aufkohlen
Procédé et installation de cémentation

(30) Priority: 05.06.2001 JP 2001169636
(43) Date of publication of application: 29.09.2010
(62) Divisional of application: 02253876.3
(73) Proprietor: Dowa Thermotech Co., Ltd., Tokyo 101-0021 (JP)
(72) Inventor: Ebihara, Hisashi, Tokyo 101-8617 (JP); Takahashi, Jun, Tokyo 101-8617 (JP); Juryozawa, Hidetoshi, Tokyo 101-8617 (JP); Abukawa, Fumitaka, Tokyo 101-8617 (JP); Yokose, Keiji, Tokyo 101-8617 (JP)
(74) Representative: Taylor, Adam David

(56) References cited:
- EP-A- 0 825 274
- FR-A- 2 722 212
- GB-A- 1 225 690
- US-A- 4 306 918
- US-A- 4 591 132
- US-A- 5 225 144
- US-A- 5 828 582
- DATABASE WPI Thomson Scientific, London, GB; AN 2000-382358 XP002237411 TAKAHASHI ATSUSHI, TAKEMOTO SHINICHI, INOUE HIDEKI, TORASAWA EIJIYU, YOKOSE KEIJI, NAKAHIRO YOSHITAKA: "Vacuum carburizing method for steel parts and apparatus therefore" & JP 2000 129418 A (DOWA MINING CO) 9 May 2000 (2000-05-09)

## Description

The present invention relates to a carburising method for carburising steel material and an apparatus therefor.

Various methods are known for carburising steel material, such as gas carburisation, vacuum carburisation, and plasma carburisation, with each having both advantages and disadvantages.

One gas carburisation method has the disadvantage of the generation of a large amount of CO₂ gas and the consequent possibility of explosions. A further problem associated with this method is that intergranular oxidation can occur on the surface of the steel material.

Another gas carburisation method, using an endothermic gas, makes it necessary to employ a metamorphism (conversion) furnace. This method therefore suffers from a problem of high equipment cost.

A vacuum carburisation method is associated with the problem that once the carbon concentration on the surface of a steel material is increased to a predetermined solid solubility, a large amount of soot will undesirably be generated. As a result, not only does the carburisation equipment need a comparatively long time for maintenance, it is also considerably expensive to maintain. Moreover, such equipment does not have sufficient versatility. For example, one problem is that it is difficult to perform a carbon potential control in an atmosphere within the furnace.

In addition, a plasma carburisation method is low in productivity.

US4306918 discloses a process for gas carburisation of ferrous metals and in particular to a process wherein a furnace atmosphere is created by injecting an oxygenated hydrocarbon into said furnace where carbon potential of the furnace atmosphere (between 0.8 and 1.1 %) is maintained during the carburizing cycle by the addition of controlled amounts of enriching or hydrocarbon carburizing agents to the mixture. The exit line of the furnace IS fitted with a sampling device and analytical means to permit measurement of the concentration of carbon monoxide and carbon dioxide.

The present invention therefore provides an improved, new and economical carburisation method which can effectively be used to replace any one of the above-described described conventional carburisation methods.

Viewed from a first aspect, the present invention provides a carburisation treatment method comprising: introducing steel material into a transportation chamber and reducing the pressure in the transportation chamber to lower than 0.1 kPa; transporting the steel material to a carburisation chamber; elevating a pressure in the carburisation chamber by introducing N₂ gas therein and elevating a temperature in the carburisation chamber; reducing the pressure in the carburisation chamber to lower than 0.1 kPa by discharging the N₂ gas; supplying an amount of hydrocarbon gas and an amount of oxidative gas to the carburisation chamber so that the internal pressure of the carburisation chamber is 0.1 to 101 kPa, the hydrocarbon gas being at least one of gases selected from the group consisting of C₃H₈, C₃H₆, C₄H₁₀, C₂H₂, C₂H₄, C₂H₆ and CH₄; controlling the amount of hydrocarbon gas and the amount of oxidative gas in the carburisation chamber with the internal pressure of the carburisation chamber kept at 0.1 to 101 kPa such that an atmosphere within the carburisation chamber has a carbon potential which is below a carbon solid solubility limit; stopping the supply of hydrocarbon gas and oxidative gas and reducing the pressure in the carburisation chamber; and after an amount of time, lowering the temperature in the carburisation chamber to an oil quenching temperature, transporting the steel material to an oil quenching chamber and performing an oil quenching treatment on the steel material in the oil quenching chamber.

The carbon potential is preferably a carbon potential that is slightly below that of the carbon solid solubility limit. By "slightly below" is meant being within 0.1% C of the carbon potential of the carbon solubility limit, preferably within 0.05% C.

The carbon solid solubility limit and therefore the carbon potential of the gaseous atmosphere varies with the temperature in the furnace but to take an example, when the temperature in the furnace is 950°C, the carbon potential of the carbon solid solubility limit is about 1.4% c. Hence, a gaseous atmosphere within a furnace which has a carbon potential that is slightly below the carbon solubility limit has a carbon potential of 1.35% C or greater, more preferably 1.35% C or greater.

With the use of this method, it becomes possible to shorten the carburisation lead time and to reduce the total energy consumption.

In one preferred embodiment of the present invention in the gaseous atmosphere within the furnace, the carbon potential is less than the carbon potential of the carbon solubility limit by about 0.05% c. Preferably, the carbon potential of the gaseous atmosphere is less than the carbon potential of the carbon solid solubility limit by about 0.03%, more preferably about 0.02%.

Further, according to the above method of the present invention, the carbonisation treatment is carried out in an atmosphere within a furnace internal pressure of the furnace has been reduced the use of this method, the reduced internal pressure the furnace makes it possible to stabilise the atmosphere having a high carbon potential. Moreover, since it is possible to prevent the generation of soot, easier maintenance of the furnace can be achieved.

In preferred embodiments of the present invention, the internal pressure within the furnace may be 0.1 to 100 kPa, preferably 1.0 to 4.0 kPa, or 20 to 99 kPa, for example, the internal pressure is about 1.7 kPa or 100 kPa. If the internal pressure within the furnace is lower than 0.1 kPa, it is impossible to ensure a desired carburisation capability. On the other hand, if the internal pressure within the furnace is larger than 101 kPa, as this internal pressure is generally close to atmospheric pressure, a problem similar to that associated with the above-described conventional gas carburisation method occurs.

In yet another preferred embodiment of the method of the present invention, between processing steps the internal pressure of the furnace is reduced to, or below 1 kPa, more preferably to, or below 0.1 kPa, for example 0.05 kPa, most preferably below 1 Pa. when the steel is being heated to the carburisation temperature (e.g. 950°C-1050°C), for example, the internal pressure of the furnace may be 1 kPa or below, more preferably 0.1 kPa or below, for example, 0.05 kPa and most preferably below 1 Pa. Additionally, or alternatively, after the carburisation treatment is complete the internal pressure of the furnace may be reduced to. 1 kPa or below, more preferably 0.1 kPa or below, for example, 0.05 kPa most preferably below 1 Pa. Following carburisation, the internal pressure of 1 kPa or below, more preferably 0.1 kPa or below, for example 0.05 kPa or most preferably below 1 Pa, may be maintained about 15 minutes or more, more preferably about 30 minutes or more.

In a further preferred embodiment of the present invention, an atmosphere haying a carbon potential slightly below that of the carbon solid solubility limit, for example, within 0.05% of the carbon potential of the carbon solid solubility limit, is maintained by directly supplying at least one of a hydrocarbon gas and an oxidative gas into the furnace. With the use of this method of the present invention, since such a method is different from the above-described vacuum carburisation method in that at least one of a hydrocarbon gas and an oxidative gas is supplied into the furnace, it becomes possible to control the atmosphere within the furnace, thus making it easier to maintain the atmosphere within the furnace at a high carbon potential which is below that of the carbon solid solubility limit. Moreover, since it is possible to dispense with an exhaust gas burning process (which is needed in the above-described conventional gas carburisation method), CO₂ gas generation is prevented so that there is so possibility of an explosion. Further, since it is not necessary to employ a metamorphism (conversion) furnace, the amount of gas necessary for the carburisation treatment can be reduced, thereby rendering the process of carburisation treatment more economic.

In the above-described method, the hydrocarbon gas is at least one selected from the group consisting of C₃H₈, C₃H₆, C₄H₁₀, C₂H₂, C₂H₄, C₂H₆, CH₄. On the other hand, the oxidative gas is at least one selected from the group consisting of air, O₂, CO₂.

Further, in the above-described method, the amount of at least one of the hydrocarbon gas and the oxidative gas being supplied to the furnace for maintaining an atmosphere having a carbon potential below that of the carbon solid solubility limit, for example within 0.05% of the carbon potential of the carbon solid solubility limit, is preferably controlled by carrying out at least one of the following measurements which include: measurement of CO gas partial pressure, measurement of CO₂ gas partial pressure, measurement of O₂ gas concentration, measurement of O₂ gas partial pressure, measurement of O₂ gas concentration, measurement of H₂ gas partial pressure, measurement of H₂ gas concentration, measurement of CH₄ gas partial pressure, measurement of CH₄ gas concentration, measurement of H₂O partial pressure, measurement of H₂O concentration, and measurement of dew point, all within the furnace.

A carburising apparatus is described herein, the apparatus comprising a hydrocarbon gas supply unit for supplying an oxidative gas into the furnace; and a vacuum pump for reducing the internal pressure within the furnace. With the use of this carburising apparatus, it is possible to carry out the above-described method of the present invention with a high efficiency. In contrast, a conventional gas carburisation furnace is not associated with the use of a vacuum pump, and a convention vacuum carburisation furnace does not contain an oxidative gas supply unit.

The above carburising apparatus further comprises an in-furnace atmosphere analyser for analysing the atmosphere within the furnace, and a pressure gauge to control the internal pressure within the furnace. With the use of such a carburising apparatus, it is possible to efficiently control the atmosphere within the furnace, and also to control, and thus reduce the internal pressure within the furnace, thereby rendering it possible to more effectively carry out the above-described method of the present invention.

In addition, the above-described carburising apparatus further comprises a computing device for computing a carbon potential in accordance with an analysis value fed from the in-furnace atmosphere analyser, a regulation device for regulating the amount of at least one of the hydrocarbon gas and oxidative gas in accordance with the computed valves fed from the computing device, and a thermo-couple for controlling the internal temperature within the furnace. With the use of this carburising apparatus, it is possible to automatically supply the hydrocarbon gas and/or the oxidative gas into the furnace, and it is also possible to control the internal temperature of the furnace.

Moreover, in the above-described carburising apparatus, the in-furnace atmosphere analyser is at least one of the following gauges and meters: CO gas partial pressure gauge, CO gas concentration meter, CO₂ gas partial pressure gauge, CO₂ gas concentration meter, O₂ gas partial pressure gauge, O₂ gas concentration meter, H₂ gas partial pressure gauge, H₂ gas concentration meter, CH₄ gas partial pressure gauge, CH₄ gas concentration meter and dew point hygrometer.

In one arrangement, the apparatus comprises a carburising apparatus comprising a carburising chamber which comprises a hydrocarbon gas supply unit, an oxidative gas supply unit, a heater, a thermocouple, a pressure gauge and a vacuum pump characterised in that said chamber further comprises a stapling device for sampling the inside the furnace, at least one analyser for the atmosphere inside the furnace, a mass-flow controller which is connected to said hydrocarbon gas supply unit, a mass flow controller which is connected to said oxidative gas supply unit, a regulation device and carbon potential confuting device wherein said regulator device has means for communicating with said computing device, said computing device has means for communicating with said analyser(s), said analyser(s) have a means for communicating with said sampling device and said regulator device has means for communicating with said mass flow controllers.

In a further arrangement the carburising apparatus further comprises a transportation chamber, a gas cooling chamber, an oil quenching chamber, and an outlet door, wherein each of said chambers has its own transfer means and each of said carburisation, gas cooling and oil quenching chambers are connected to said transportation chamber.

Preferred embodiments of the present invention will now be described by way of example only and with reference to the accompanying drawings, in which:
Fig. 1 is a schematic diagram showing a preferred carburisation furnace suitable for carrying out the carburisation treatment in accordance with the present invention.
Fig. 2 is a schematic diagram showing a preferred structure of a carburisation apparatus suitable for carrying out the carburisation method in accordance with the present invention.
Fig. 3 is a graph showing the average carbon concentration distribution of the steel material treated in Example 1.
Fig. 4 is a photograph showing the surface organization of the steel material treated in Example 1.
Fig. 5 is a graph showing the average carbon concentration distribution of the steel material treated in Example 2.
Fig. 6 is a photograph showing the surface organisation of the steel material treated in Example 2.
Fig. 7 is a photograph of the steel material treated in Example 2 additionally showing the crystal grains.

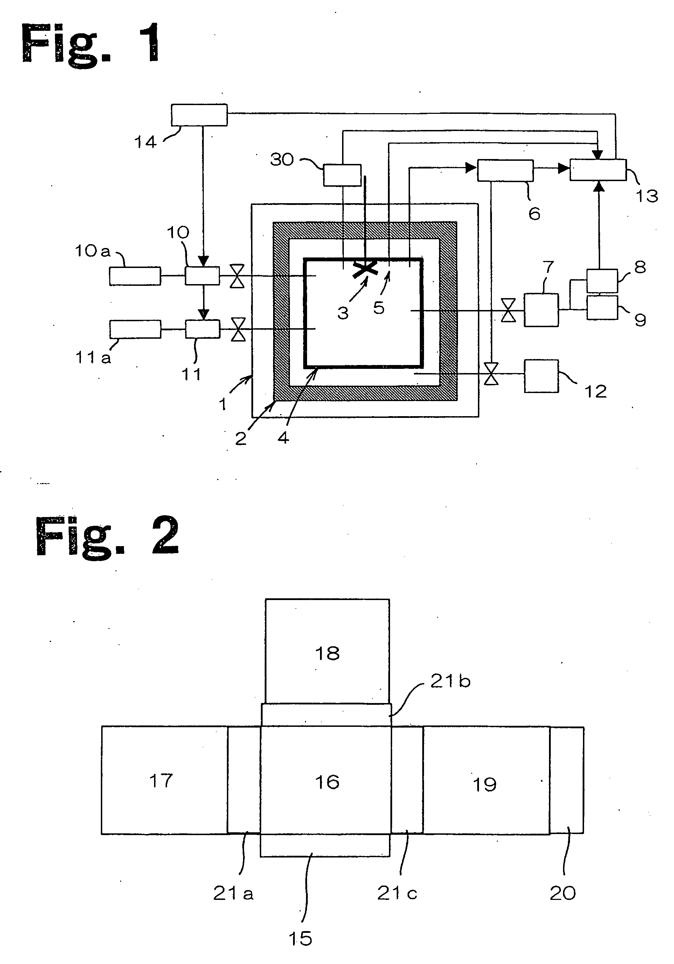

Referring to Figure 1, reference numeral 1 represents a furnace casing, reference numeral 2 represents a thermally insulating material, reference numeral 3 represents an atmosphere stirring fan, reference numeral 4 represents a heater, reference numeral 5 represents a thermal couple for measuring the internal temperature of the furnace, reference numeral 6 represents a pressure gauge for controlling (e.g. reducing) the internal pressure of the furnace, reference numeral 7 represents a sampling device for sampling the atmosphere inside the furnace, reference numeral 8 represents an analyser for analysing the atmosphere inside the furnace. Such an analyser may be a CO gas partial pressure gauge or a CO gas concentration meter. Reference numeral 9 represents a second analyser for analysing the atmosphere within the furnace. This analyser may be a CO₂ gas partial pressure gauge or a CO₂ gas concentration meter. Reference numeral 30 represents a further analyser for analysing the atmosphere within the furnace. This analyser may be an O₂ gas partial pressure gauge or an O₂ gas concentration meter. Reference numeral 10 represents a mass flow controller which is connected to a hydrocarbon gas supply unit 10a for controlling the amount of hydrocarbon gas to be supplied to the furnace. Reference numeral 11 represents another mass flow controller which is connected to an oxidative gas supply unit 11a for controlling the amount of oxidative gas to be supplied to the furnace. Reference numeral 12 represents a vacuum pump which can be used to reduce the internal pressure within the furnace. Reference numeral 13 represents a carbon potential computing device and reference numeral 14 represents a regulation device for sending regulation signals to the mass flow controllers 10 and 11 in accordance with the computed values fed from the carbon potential computing device 13. The thermally insulating material 2 is preferably made of a ceramic fiber having a low heat radiation and a low heat accumulation.

With regard to the aforementioned carburisation furnace having the above-described construction, the pressure reduction adjustment within the furnace can be carried out by controlling the discharge of gas from within the furnace, by virtue of the pressure gauge 6 and the vacuum pump 12. Further, the carbon potential of an atmosphere within the furnace may be controlled in a manner described as follows, so that it is possible to maintain a high carbon potential which is slightly below that of the carbon solid solubility limit. The analysis values from the internal atmosphere analysers 8, 9 and 30 may be fed into the carbon potential computing device 13. The adjustment gauge 14, with regard to the valves computed by the carbon potential computing device 13, then operates to send an adjustment signal to the mass-flow controller 10 (which controls the supply of hydrocarbon gas) as well as to the mass flow controller 11 (which controls the supply of oxidative gas). In this way, it is possible to adjust the amount of at least one of the hydrocarbon gas and the oxidative gas being supplied into the furnace, thereby effectively controlling the carbon potential of the atmosphere within the furnace.

Control of the amount of the hydrocarbon gas and/or the oxidative gas being supplied into the furnace may be effected by measuring the partial pressure of at least one of the various kinds of gases which form an atmosphere within the furnace. However, it is also possible to exercise control by measuring the concentration of at least one of the various kinds of gases which form an atmosphere within the furnace. For example, it is possible to measure the partial pressure or the concentration of at least one of CO gas, CO₂ gas, O₂ gas, H₂ gas and CH₄ gas (which together form an atmosphere within the furnace), by utilising various partial pressure gauges (CO gas partial pressure gauge, CO₂ gas partial pressure gauge, O₂ gas partial pressure gauge, H₂ gas partial pressure gas and CH₄ gas partial pressure gas) or various concentration meters (CO gas concentration meter, CO₂ gas concentration meter, O₂ gas concentration meter, H₂ gas concentration meter and CH₄ gas concentration meter), thereby effecting control of the amount of hydrocarbon gas and/or oxidative gas being supplied into the furnace.

Alternatively, it is possible to control the amount of the hydrocarbon gas and/or the oxidative gas being supplied into the furnace, by measuring the partial pressure of H₂O or the concentration of H₂O within the furnace, or by measuring the dew point of a gas present in the atmosphere within the furnace using a dew point hygrometer.

By use of the various methods described above, it is possible to accurately control the amount of the hydrocarbon gas and/or the oxidative gas being supplied into the furnace, thereby making it possible to keep the atmosphere within the furnace at a high carbon potential which is slightly below that of the carbon solid solubility.

Referring to Figure 2, reference numeral 15 represents an inlet door, reference number 16 represents a transportation chamber, reference numeral 17 represents a carburisation chamber, reference numeral 18 represents a gas cooling chamber, reference numeral 19 represents an oil quenching chamber, reference numeral 20 represents an outlet door, and reference numerals 21a, 21b and 21c all represent partition doors. The carburisation chamber 17 comprises the carburisation furnace shown in Figure 1.

Prior to commencing the carburisation treatment the inlet door 15, the outlet door 20 and the partition doors 21a, 21b and 21c are all closed. The carburisation chamber 17 is heated to a holding temperature e.g. 850°C (that is, lower than the carburisation temperature, e.g. 950°C) and is then kept at this temperature, while the pressure within the carburisation chamber is controlled to 0.1 kPa or lower. Similarly, the pressure within the quenching chamber 19 is kept at 0.1 kPa or lower.

Meanwhile the quenching oil within the quenching chamber 19 is heated to a temperature suitable for steel material quenching treatment. At this time, the transportation chamber 16 is at atmospheric pressure.

Starting from the above-described initial state, the inlet door 15 is opened so that steel material may be introduced into the transportation chamber 16. The inlet door 15 is then closed and the pressure within the transportation chamber 16 is reduced to lower than 0.1 kPa. The partition door 21a, located between the transportation chamber 16 and the carburisation chamber 17, is subsequently opened so that the steel material may be moved to the carburisation chamber 17. The partition wall 21 is then closed. Although not shown in the drawings, an apparatus for transporting the steel material may be a chain device driven by a motor, and/or may be a roller hearth. For example, a chain device may be used for transportation in the transportation and/or oil quenching chambers, 16 and 19 respectively and a roller hearth may be used in the carburisation chamber 17.

After the partition door 21a is closed, the pressure within the carburisation chamber 17 is altered to a predetermined pressure, such as 100 kPa, by adding an inert gas such as N₂ gas, while the temperature within the carburisation chamber is increased to the carburisation temperature. Other examples of suitable inert gases are Ar and He. After the carburisation chamber 17 has been kept at the carburisation temperature for 30 minutes, the N₂ gas is discharged from the carburisation chamber 17, so that the pressure within the carburisation chamber 17 is reduced to lower than 0.1 kPa.

Afterwards a predetermined amount of hydrocarbon gas and a predetermined amount of oxidative gas are supplied to the carburisation chamber 17 via a purge line, so that the internal pressure within the carburisation chamber 17 is allowed to be restored to its carburisation pressure. Upon pressure restoration, based on the computation result obtained by processing the data obtained by measuring the CO₂ partial pressure or CO₂ concentration, the amount of at least one of the hydrocarbon gas and the oxidative gas supplied to the carburisation chamber 17 is controlled, using a control line. At this time, the carbon potential is set with reference to the carbon solid solubility limit which depends on the carburisation temperature, so that the carbon potential will be within a predetermined range so as not to produce soot.

After having performed the carburisation treatment for a predetermined time period, the supply of the hydrocarbon gas as well as the oxidative gas to the carburisation chamber 17 is stopped, and the gases within the carburisation chamber 17 are discharged so as to have the steel material kept under a reduced pressure, thereby adjusting the carbon concentration on the surface of the steel material. The temperature within the carburisation chamber 17 is then lowered to the quenching temperature, and the partition door 21a is opened. Further the partition door 21c, located between the transportation chamber 16 and the quenching chamber 19, is opened so that the steel material may be transferred, under a reduced pressure, to the quenching chamber 19 (via the transportation chamber 16) wherein an oil quenching treatment is performed.

After the quenching treatment, the steel material is taken out of the treatment system via the outlet door 20. An adjustment of the carbon concentration on the surface of the steel material, as well as control of the quenching temperature may be carried out at the same time.

Furthermore, in the case of a high temperature carburisation treatment (for example, carburisation at 1050°C or greater) which requires an adjustment of the size of the crystal grains, after this adjustment has been performed on the carbon concentration on the surface of the treated steel material, the steel material is transported to the gas cooling chamber 18 via the transportation chamber 16 as well as the partition door 21b. After the pressure has been restored to a predetermined value (for example, 100 kPa) by means of N₂ gas, the steel material is cooled and the N₂ gas is discharged, so that the pressure over the steel material is reduced to 1 kPa or lower. Under this reduced pressure the steel material is returned to the carburisation chamber 17 via the transportation chamber 16, so as to be heated again to a temperature suitable for a reheating treatment. Moreover, the carburisation chamber 17 is kept at the reheating temperature for 30 minutes. The N₂ gas is then discharged so that the pressure within the carburisation chamber 17 is reduced to 1 kPa or lower. Subsequently, the steel material is transported to the quenching chamber 19 via the transportation chamber 16, to undergo an oil quenching treatment. After the quenching treatment has been finished, the steel material is taken out of the treatment system by way of the outlet door 20.

In fact, the inventors of the present invention have conducted the carburisation treatment using the method of the present invention, with an actual process and the results thereof are discussed in the following examples.

### Example 1

Sections of steel material SCM 420, in the form of test pieces each having a diameter of 20 mm and a length of 40 mm, were disposed at nine positions (including upper and lower corner portions as well as in the central area) within a carburisation chamber 17 whose internal temperature was controlled at 950°C and whose internal pressure was controlled at lower than 0.1 kPa. The pressure within the carburisation chamber 17 was then restored to 100 kPa by charging the chamber with N₂ gas, while the internal temperature thereof was kept at 950°C.

After the carburisation chamber 17 had been kept at 100 kPa and 950°C for 30 minutes, the internal pressure was reduced to 0.1 kPa by discharging gas. C₃H₈ gas and CO₂ gas were subsequently supplied into the carburisation chamber 17, each at a flow rate of 3.5 l/min so as to increase the internal pressure to 1.7 kPa.

Next, with the internal pressure of the carburisation chamber 17 kept at 1.7 kPa, the amount of C₃H₈ gas and/or CO₂ gas being supplied to the carburisation chamber 17 was changed so as to control the carbon potential to 1.25%. Then, the interior of the carburisation chamber 17 was kept at 950°C for 57 minutes.

Subsequently, the supply of C₃H₈ gas and/or CO₂ gas was stopped and the internal pressure within the carburisation chamber 17 was reduced to 0.1 kPa by discharging gas. This internal pressure was maintained for 37 minutes, while the internal temperature of the carburisation chamber 17 was lowered to 870°C during a subsequent time period of 30 minutes. The steel material was then transported to the quenching chamber 19 via the transportation chamber 16, to commence the oil quenching treatment.

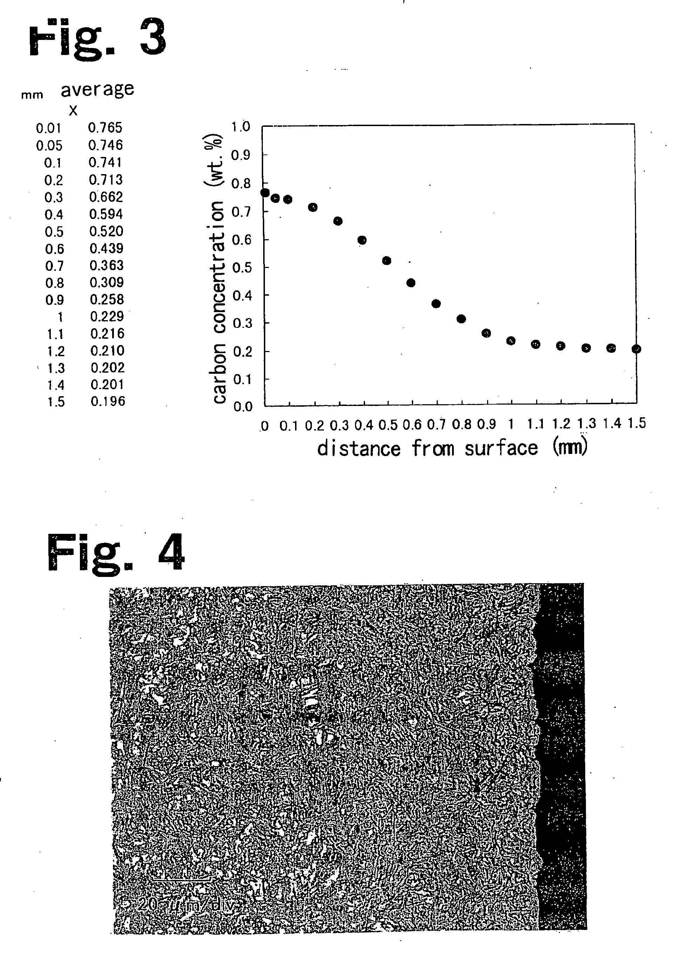

The average carbon concentration distribution of the steel material produced by the afore-mentioned treatment is shown in Figure 3. More specifically the carbon concentrations shown in Figure 3 represent the average values of the carbon concentrations of the steel material pieces located at the aforementioned nine positions. As a result, an effective carburisation depth (0.36% C) could be found to be 0.7 mm, which was an appropriate value. A photograph representing the surface organization of the treated steel material is shown in Figure 4. It is to be noted that there were no abnormal layers formed on the surface of the steel material treated in the above-described process.

The carburisation lead time of the carburisation treatment in Example 1 was 94 minutes whereas the carburisation lead time of a conventional gas carburisation treatment using an endothermic gas is 118 minutes. The carburisation method of the present invention therefore shortens the carburisation lead time by about 20%. Thus by using the carburisation method carried out in Example 1, it becomes possible to obtain a carburised layer having a desired depth using a shorter time period than required by the above described conventional gas carburisation treatment (which requires the use of an endothermic gas). The total energy consumption can therefore be reduced and thus the desired economic advantage can be achieved.

Moreover, since there is no soot generated in the method of the invention, the pieces of steel material can be placed at any position within the furnace without any limitation.

In addition, the use of the present invention makes it possible to obtain carburised layers which are relatively uniform and show little difference from each other in their physical and chemical properties.

### Example 2

Example 2 illustrates how a high temperature carburisation can be carried out in accordance with the method of the present invention. Sections of steel material pieces, identical to those used in Example 1, were disposed at nine positions within the carburisation chamber 17 whose internal temperature was controlled at 1050°C and whose internal pressure was controlled at lower than 0.1 kPa. The pressure within the carburisation chamber 17 was then restored to 100 kPa by charging the chamber with N₂ gas, while the internal temperature was kept at 1050°C.

After the carburisation chamber 17 had been kept at 100 kPa and 1050°C for 30 minutes, its internal pressure was reduced to 0.1 kPa by discharging gas. C₃H₈ gas and CO₂ gas were subsequently supplied into the carburisation chamber 17, at a flow rate of 14 l/min so as to increase the internal pressure to 1.7 kPa.

Next, with the internal pressure of the carburisation chatriber 17 kept at 1.7 kPa, the amount of CO₂ gas supplied was controlled at a constant flow rate of 10 l/min, while the amount of C₃H₈ gas supplied was changed so as to have the carbon potential controlled at 1.4%. Then, the interior of the carburisation chamber 17 was kept at 1050°C for 16 minutes.

Subsequently, the supply of C₃H₈ gas and CO₂ gas was stopped and the internal pressure within the carburisation chamber 17 was reduced to 0.1 kPa by discharging gas. This internal pressure was kept for 16 minutes. Afterwards, the steel material was cooled and then heated again so as to adjust the size of the crystal grains.

More specifically, the steel material was transported from the carburisation chamber 17 to the gas cooling chamber 18 via the transportation chamber 16. The interior of the gas cooling chamber 18 was then restored to 100 kPa by charging the room with N₂ gas, followed by cooling the same for 15 minutes. Afterwards, the N₂ gas was discharged and the internal pressure within the gas cooling chamber 18 was reduced to 0.1 kPa or lower. At this time, the steel material was transported into the carburisation chamber 17 via the transportation chamber 16. The steel material was then heated so as to increase its temperature, with the heating process being conducted under conditions in which the N₂ gas was still present and the internal pressure within the carburisation room was 100 kPa. After maintaining these conditions for 30 minutes, the internal pressure within the carburisation chamber 17 was reduced to 0.1 kPa by discharging gas, while the steel material was transported to the quenching chamber 19 via the transportation chamber 16, to commence the oil quenching treatment.

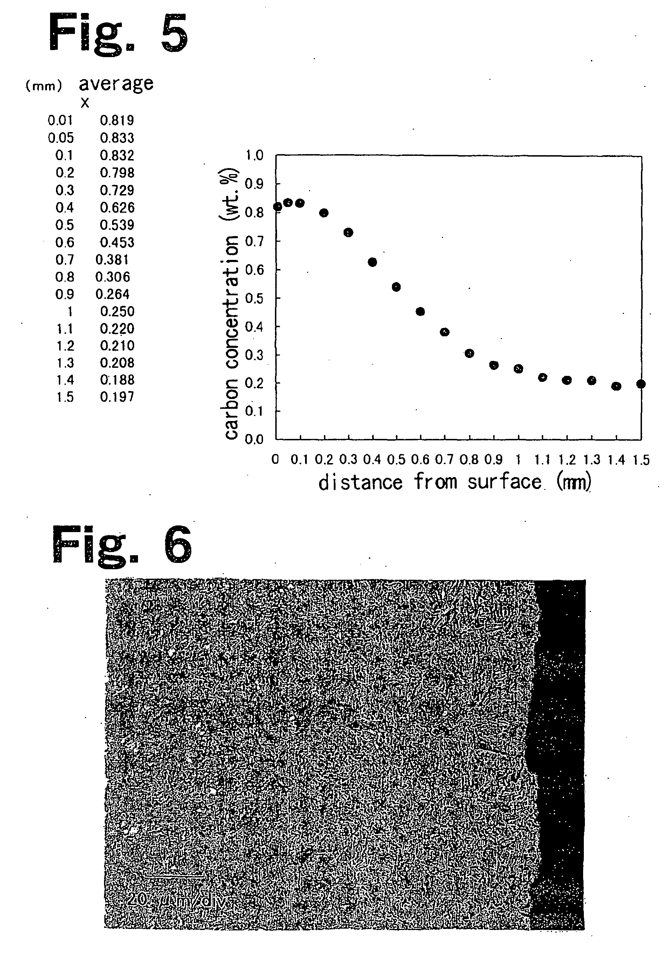

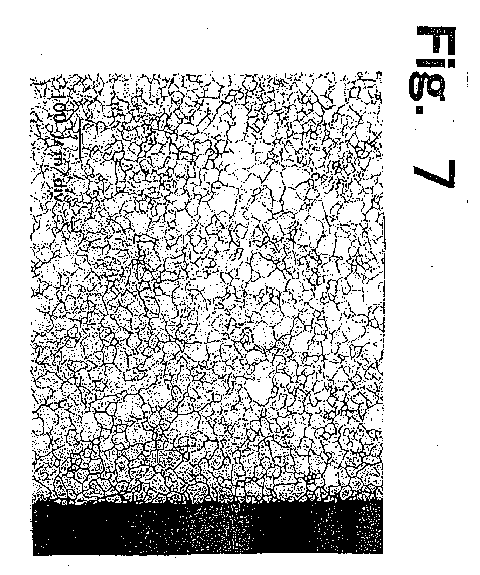

The average carbon concentration distribution of the steel material produced by the above-described treatment is shown in Figure 5. As in Figure 3, the carbon concentrations shown in Figure 5 represent the average values of the carbon concentrations of the steel material pieces located at the aforementioned nine positions. As a result, an effective carburisation depth (0.36% C) was found to be 0.73 mm, which was an appropriate value. A photograph indicating the surface organization of the treated steel material is shown in Figure 6. It is to be noted that there were no abnormal layers formed on the surface of the steel material treated in the above described process. In addition, one example of a photograph showing the resulting microstructure is shown in Figure 7. Here, the crystal grain size was #9, i.e. between 3000-6000 grains/mm² which was an appropriate value.

Since the treatment temperature was set at 1050°C, which is a high temperature for carburisation, and since the carbon potential was set at 1.4%, the carburisation lead time of the carburisation treatment in Example 2 was relatively short. In fact, the carburisation lead time in this example was reduced by about 73% compared with the aforementioned conventional gas carburisation treatment (which uses an endothermic gas). Accordingly, by using the carburisation treatment method carried out in Example 2, it becomes possible to obtain a carburised layer having a desired depth, using a reduced time period compared to that required by the above described conventional gas carburisation treatment (which uses an endothermic gas). Consequently, it is possible to reduce the total energy consumption.

Moreover, since there is no soot generated by the method according to the invention, the pieces of steel material can be placed at any position within the furnace without any limitation. Thus use of the present invention makes it possible to obtain carburised layers which are relatively uniform and which show little difference from each other in their physical and chemical properties.

### Example 3

Example 3 was conducted in the same way as Example 1 but using a different carburisation pressure. Sections of steel material pieces, identical to those used in Example 1, were disposed at nine positions within the carburisation chamber 17, whose internal temperature was controlled at 950°C and whose internal pressure was controlled at lower than 0.1 kPa. The pressure within the carburisation chamber 17 was then restored to 100 kPa by charging the chamber with N₂ gas, while the internal temperature was maintained at 950°C.

After the carburisation chamber 17 had been maintained at 100 kPa and 950°C for 30 minutes, its internal pressure was reduced to 0.1 kPa by discharging gas. C₃H₈ gas and CO₂ gas were subsequently supplied into the carburisation chamber 17, each at a flow rate of 15 l/min so as to increase the internal pressure to 100 kPa.

Next, with the internal pressure of the carburisation chamber 17 kept at 100 kPa, the amount of CO₂ gas and/or the amount of C₃H₈ gas supplied was changed so as to have the carbon potential controlled at 1.25%. Then, the interior of the carburisation chamber 17 was kept at 950°C for 57 minutes.

The supply of C₃H8 gas and CO₂ gas was subsequently stopped and the internal pressure within the carburisation chamber 17 was reduced to 0.1 kPa by discharging gas. This internal pressure was then kept for 37 minutes, while the internal temperature of the carburisation chamber 17 was lowered to 870°C over a subsequent time period of 30 minutes. Afterwards, the steel material was transported to the quenching chamber 19 via the transportation chamber 16, to commence the oil quenching treatment.

As a result, an effective carburisation depth (0.36% C) of the treated steel material in this example was found to be 0.72 mm, which was an appropriate value, and no soot was generated.

## Claims

1. A carburisation treatment method comprising:
introducing steel material into a transportation chamber (16) and reducing the pressure in the transportation chamber to lower than 0.1 kPa;
transporting the steel material to a carburisation chamber (17);
elevating a pressure in the carburisation chamber by introducing N₂ gas therein and elevating a temperature in the carburisation chamber ;
reducing the pressure in the carburisation chamber to lower than 0.1 kPa by discharging the N₂ gas;
supplying an amount of hydrocarbon gas and an amount of oxidative gas to the carburisation chamber so that the internal pressure of the carburisation chamber is 0.1 to 101 kPa, the hydrocarbon gas being at least one of gases selected from the group consisting of C₃H₈, C₃H₆, C₄H₁₀, C₂H₂, C₂H₄, C₂H₆ and CH₄;
controlling the amount of hydrocarbon gas and the amount of oxidative gas in the carburisation chamber with the internal pressure of the carburisation chamber kept at 0.1 to 101 kPa such that an atmosphere within the carburisation chamber has a carbon potential which is below a carbon solid solubility limit;
stopping the supply of hydrocarbon gas and oxidative gas and reducing the pressure in the carburisation chamber; and
after an amount of time, lowering the temperature in the carburisation chamber to an oil quenching temperature, transporting the steel material to an oil quenching chamber (19) and performing an oil quenching treatment on the steel material in the oil quenching chamber.

2. A carburisation treatment method according to claim 1, wherein the atmosphere having a carbon potential below the carbon solid solubility is maintained by directly supplying at least one of the hydrocarbon gas and the oxidative gas into the carburisation chamber (17) .

3. A carburisation treatment method according to claim 2, wherein the oxidative gas is O₂ gas or CO₂ gas.

4. A carburisation treatment method according to claim 2, wherein the amount of at least one of the hydrocarbon gas and the oxidative gas being supplied to the carburisation chamber (17) for maintaining the atmosphere having a carbon potential below the carbon solid solubility is controlled by carrying out at least one of the following measurements: measurement of CO gas partial pressure, measurement of CO gas concentration, measurement of CO₂ gas partial pressure measurement of CO₂ gas concentration, measurement of O₂ gas concentration, measurement of H₂ gas partial pressure, measurement of H₂ gas concentration, measurement of CH₄ gas partial pressure, measurement of CH₄ gas concentration, measurement of H₂O partial pressure, measurement of H₂O concentration, and measurement of dew point, all within the carburisation chamber.

5. A carburisation treatment method according to any preceding claim, wherein:
the transportation chamber (16) is configured to transport the steel material between the carburisation chamber (17), the oil quenching chamber (19) and a gas cooling chamber (18);
the transportation of the steel material is carried out after the pressure of the transportation chamber has been reduced from the transportation chamber to the carburisation chamber by way of opening a first partition door (21a) located between the transportation chamber and the carburisation chamber;
the elevation of the temperature in the carburisation chamber is carried out after the first partition door is closed;
after the temperature in the carburisation chamber is lowered to the oil quenching chamber the first partition door is opened; and
the transportation of the steel material to the oil quenching chamber from the carburisation chamber is carried out via the transportation chamber by opening a second partition door (21c) located between the transportation chamber and the oil quenching chamber.

6. A carburisation treatment method according to claim 5, comprising, after the oil quenching, removing the steel material through an outlet door (20).

7. The carburisation treatment method according to claim 6, comprising transporting the steel material to the gas cooling chamber (18) from the carburisation chamber (17), via the transportation chamber (16), by opening a third partition door (21b) located between the gas cooling chamber and the transportation chamber.

## Patentansprüche

1. Aufkohlungsbehandlungsverfahren, das Folgendes umfasst:
Einführen von Stahlmaterial in eine Transportkammer (16) und Reduzieren des Drucks in der Transportkammer auf weniger als 0,1 kPa;
Transportieren des Stahlmaterials zu einer Aufkohlungskammer (17);
Erhöhen des Drucks in der Aufkohlungskammer durch Zuführen von N₂-Gas darin und Erhöhen der Temperatur in der Aufkohlungskammer;
Reduzieren des Drucks in der Aufkohlungskammer auf weniger als 0,1 kPa durch Abgeben des N₂-Gases;
Zuführen einer Menge eines Kohlenwasserstoffgases und einer Menge eines oxidativen Gases an die Aufkohlungskammer, sodass der Innendruck der Aufkohlungskammer 0,1 bis 101 kPa ist, wobei das Kohlenwasserstoffgas mindestens eins von aus der Gruppe bestehend aus C₃H₈, C₃H₆, C₄H₁₀, C₂H₂, C₂H₄, C₂H₆ und CH₄ ausgewählten Gasen ist;
Kontrollieren der Menge an Kohlenwasserstoffgas und der Menge an oxidativem Gas in der Aufkohlungskammer, wobei der Innendruck der Aufkohlungskammer bei 0,1 bis 101 kPa gehalten wird, sodass eine Atmosphäre innerhalb der Aufkohlungskammer ein Kohlenstoffpotential aufweist, das unter einer Festkörperlöslichkeitsgrenze von Kohlenstoff liegt.
Stoppen der Zufuhr von Kohlenwasserstoffgas und oxidativem Gas und Reduzieren des Drucks in der Aufkohlungskammer; und
nach einiger Zeit Verringern der Temperatur in der Aufkohlungskammer auf eine Ölabschreckungstemperatur, Transportieren des Stahlmaterials in eine Ölabschreckkammer (19) und Durchführen der Ölabschreckungsbehandlung auf dem Stahlmaterial in der Ölabschreckkammer.

2. Aufkohlungsbehandlungsverfahren nach Anspruch 1, wobei die Atmosphäre, die ein Kohlenstoffpotential unter der Festkörperlöslichkeitsgrenze von Kohlenstoff aufweist, durch direktes Zuführen von mindestens einem der Kohlenwasserstoffgase und des oxidativen Gases in die Aufkohlungskammer (17) aufrechterhalten wird.

3. Aufkohlungsbehandlungsverfahren nach Anspruch 2, wobei das oxidative Gas O₂-Gas oder CO₂-Gas ist.

4. Aufkohlungsbehandlungsverfahren nach Anspruch 2, wobei die Menge von mindestens einem der Kohlenwasserstoffgase und des oxidativen Gases, die der Aufkohlungskammer (17) zum Aufrechterhalten der Atmosphäre, die ein Kohlenstoffpotential unter der Festkörperlöslichkeit von Kohlenstoff aufweist, zugeführt werden, durch Durchführen mindestens einer der folgenden Messungen kontrolliert wird: Messung des Partialdrucks des CO-Gases, Messung der Konzentration des CO-Gases, Messung des Partialdrucks des CO₂-Gases, Messung der Konzentration des CO₂-Gases, Messung der Konzentration des O₂-Gases, Messung des Partialdrucks des H₂-Gases, Messung der Konzentration des H2-Gases, Messung des Partialdrucks des CH₄-Gases, Messung der Konzentration des CH₄-Gases, Messung des H₂O-Partialdrucks, Messung der H₂O-Konzentration und Messung des Taupunkts, alle innerhalb der Aufkohlungskammer.

5. Aufkohlungsbehandlungsverfahren nach einem der vorherigen Ansprüche, wobei:
die Transportkammer (16) zum Transportieren des Stahlmaterials zwischen der Aufkohlungskammer (17), der Ölabschreckkammer (19) und einer Gaskühlkammer (18) konfiguriert ist;
der Transport des Stahlmaterials durchgeführt wird, nachdem der Druck der Transportkammer reduziert wurde, von der Transportkammer zu der Aufkohlungskammer durch Öffnen einer ersten Trenntür (21A), die zwischen der Transportkammer und der Aufkohlungskammer liegt;
die Erhöhung der Temperatur der Aufkohlungskammer durchgeführt wird, nachdem die erste Trenntür geschlossen ist;
nachdem die Temperatur in der Aufkohlungskammer verringert ist, die erste Trenntür zu der Ölabschreckkammer geöffnet wird; und
der Transport des Stahlmaterials von der Aufkohlungskammer zu der Ölabschreckkammer über die Transportkammer durch Öffnen einer zweiten Trenntür (21C), die zwischen der Transportkammer und der Ölabschreckkammer liegt, durchgeführt wird.

6. Aufkohlungsbehandlungsverfahren nach Anspruch 5, das nach der Ölabschreckung das Entfernen des Stahlmaterials durch eine Auslasstür (20) umfasst.

7. Aufkohlungsbehandlungsverfahren nach Anspruch 6, das das Transportieren des Stahlmaterials von der Aufkohlungskammer (17) zu der Gaskühlkammer (18) über die Transportkammer (16) durch Öffnen einer dritten Trenntür (21b), die zwischen der Gaskühlkammer und der Transportkammer liegt, umfasst.

## Revendications

1. Procédé de traitement de cémentation comprenant :
l'introduction d'un matériau en acier dans une chambre de transport (16) et la réduction de la pression de la chambre de transport à moins de 0,1 kPa ;
le transport du matériau en acier dans une chambre de cémentation (17) ;
l'élévation de la pression dans la chambre de cémentation en y introduisant un gaz N₂ et l'élévation de la température dans la chambre de cémentation ;
la réduction de la pression dans la chambre de cémentation à moins de 0,1 kPa en évacuant le gaz N₂ ;
la fourniture d'une quantité de gaz hydrocarbure et d'une quantité de gaz oxydant dans la chambre de cémentation de sorte que la pression interne de la chambre de cémentation soit de 0,1 à 101 kPa, le gaz hydrocarbure étant au moins l'un des gaz choisis dans le groupe consistant en C₃H₈, C₃H₆, C₄H₁₀, C₂H₂, C₂H₄, C₂H₆ et CH₄ ;
la régulation de la quantité de gaz hydrocarbure et de la quantité de gaz oxydant dans la chambre de cémentation avec la pression interne de la chambre de cémentation maintenue à 0,1 à 101 kPa de sorte qu'une atmosphère au sein de la chambre de cémentation ait un potentiel de carbone qui soit en dessous d'une limite de solubilité à l'état solide du carbone ;
l'arrêt de la fourniture de gaz hydrocarbure et de gaz oxydant et la réduction de la pression dans la chambre de cémentation ; et
après un laps de temps prédéterminé, l'abaissement de la température dans la chambre de cémentation à une température de trempe à l'huile, le transport du matériau en acier dans une chambre de trempe à l'huile (19) et la réalisation d'un traitement de trempe à l'huile sur le matériau en acier dans la chambre de trempe à l'huile.

2. Procédé de traitement de cémentation selon la revendication 1, dans lequel l'atmosphère ayant un potentiel de carbone en dessous de la solubilité à l'état solide du carbone est maintenue en fournissant directement au moins l'un du gaz hydrocarbure et du gaz oxydant dans la chambre de cémentation (17).

3. Procédé de traitement de cémentation selon la revendication 2, dans lequel le gaz oxydant est le gaz O₂ ou le gaz CO₂.

4. Procédé de traitement de cémentation selon la revendication 2, dans lequel la quantité d'au moins l'un des gaz hydrocarbure et du gaz oxydant fournis à la chambre de cémentation (17) pour maintenir l'atmosphère ayant un potentiel de carbone en dessous de la solubilité à l'état solide du carbone est régulée en effectuant au moins l'une des mesures suivantes : mesure de la pression partielle de gaz CO, mesure de la concentration en gaz CO, mesure de la pression partielle de gaz CO₂, mesure de la concentration en gaz CO₂, mesure de la concentration en gaz O₂, mesure de la pression partielle de gaz H₂, mesure de la concentration en gaz H₂, mesure de la pression partielle de gaz CH₄, mesure de la concentration en gaz CH₄, mesure de la pression partielle de H₂O, mesure de la concentration en H₂O, et mesure du point de rosée, le tout au sein de la chambre de cémentation.

5. Procédé de traitement de cémentation selon l'une quelconque des revendications précédentes, dans lequel :
la chambre de transport (16) est configurée pour transporter le matériau en acier entre la chambre de cémentation (17), la chambre de trempe à l'huile (19) et une chambre de refroidissement de gaz (18) ;
le transport du matériau en acier est effectué après que la pression de la chambre de transport a été réduite de la chambre de transport à la chambre de cémentation au moyen de l'ouverture d'une première porte de cloisonnement (21a) située entre la chambre de transport et la chambre de cémentation ;
l'élévation de la température dans la chambre de cémentation est effectuée après que la première porte de cloisonnement est fermée ;
après que la température dans la chambre de cémentation est abaissée à la chambre de trempe à l'huile, la première porte de cloisonnement est ouverte ; et
le transport du matériau en acier de la chambre de trempe à l'huile depuis la chambre de cémentation est effectué via la chambre de transport en ouvrant une deuxième porte de cloisonnement (21c) située entre la chambre de transport et la chambre de trempe à l'huile.

6. Procédé de traitement de cémentation selon la revendication 5, comprenant, après la trempe à l'huile, l'enlèvement du matériau en acier par une porte de sortie (20).

7. Procédé de traitement de cémentation selon la revendication 6, comprenant le transport du matériau en acier dans la chambre de refroidissement de gaz (18) depuis la chambre de cémentation (17), via la chambre de transport (16), en ouvrant une troisième porte de cloisonnement (21b) située entre la chambre de refroidissement de gaz et la chambre de transport.
